**Europäisches Patentamt**

**European Patent Office**

**Office européen des brevets**

(19)

(11) Publication number: **0 165 761**
**A2**

# (12) EUROPEAN PATENT APPLICATION

(21) Application number: 85304152.3

(22) Date of filing: 12.06.85

(51) Int. Cl.⁴: **G 01 N 27/90**

(30) Priority: 15.06.84 US 621002

(43) Date of publication of application:
27.12.85 Bulletin 85/52

(84) Designated Contracting States:
BE DE FR GB IT SE

(71) Applicant: WESTINGHOUSE ELECTRIC CORPORATION
Westinghouse Building Gateway Center
Pittsburgh Pennsylvania 15235(US)

(72) Inventor: Mark, Richard Hartley, Jr.
641 5th Street
Pitcairn Pennsylvania(US)

(74) Representative: van Berlyn, Ronald Gilbert
23, Centre Heights
London, NW3 6JG(GB)

(54) Method and apparatus for displaying eddy current detector data.

(57) A method and apparatus for producing a display of test data generated by an eddy current detector. The data is processed for display by deriving from each detector signal the components in phase with and in quadrature with an associated test frequency signal, the detector location with respect to the test body for each derived phase component and similar phase components of a selected mixture of test frequencies and then storing the detector signals and the derived data. Subsequently, a first composite display of paired parallel strip charts (4, 5) is provided in which the derived phase components (9) are plotted against detector location (7) for each test frequency and the selected mix of test frequencies. A second composite display is provided of the Lissajous figures (34, 36, 38, 40) for each test frequency and for the selected mix of test frequencies for any designated region of any strip chart (4, 5).

FIG. I

1

# METHOD AND APPARATUS FOR DISPLAYING
# EDDY CURRENT DETECTOR DATA

The present invention relates to the display of data derived from an eddy current detector. More particularly, this invention concerns a computer-aided interactive color graphics display system in which fault detection data for all the test frequencies used is available in two selectable composite displays. The first display provided is an array of color-coded strip charts in which, for each test frequency and for a selected mix of test frequencies, the components of the unbalance voltage in phase and in quadrature with the test signal are plotted relative to location in the body being tested. The second display provided is an array of color-coded Lissajous figures of a selected portion of the plotted test data for each respective pair of strip chart displays.

Known eddy current detectors include two coils mounted in adjacent arms of an electrical bridge which is configured for movement in a known manner in or along a metallic body to be tested. An alternating current test signal composed of one or more test frequencies passed through the bridge generates an electromagnetic field which induces eddy currents in the test body. The induced eddy currents, in turn, produce electromagnetic fields acting in opposition to the initial field which vary the impedance in one or both coils creating in the bridge an unbalance voltage which is the difference between the voltages across the two coils. Any flaw within the test body modifies the intensity of the eddy currents and thus the impedance of the coils. Each test frequency used is associated with a particular scanning depth in the body under test and analysis of flaws detected in the body is based upon phase displacement between components of the test signal and that of the unbalance voltage signal for each frequency.

Typically, eddy current data is presented on a display monitor in the form of a single monochrome strip chart representing the phase displacement between components of the test signal and that of the unbalance voltage signal for a single frequency. Such a display is then scrolled until an area of the display containing information of interest is lined up with a selected window. The stored information associated with that display area is then processed to produce a corresponding Lissajous figure representing the relationship between the quadrature and in-phase components associated with the display portion associated with the area of interest. With this technique, however, a single composite view of all the flaws that may exist at a particular location in the body is not possible. As a result, the relationship between two or more faults occurring at or near the same location in the test body may be found only by a time-consuming process of switching between displays or it may be overloaded.

This invention has for a principal object a method of providing two alternate, complementary, composite displays providing fault information at several depths in a single location of the body under test. The first composite display is a set of time-coincident waveforms in the form of parallel strip charts on which the in-phase and quadrature components associated with each test frequency comprising the alternating current test signal and a mix of components of several test frequencies are plotted. The second composite display is selected when a pair of associated strip charts has a region appear in which the plotted components significantly differ indicating location of a fault in the test body. The second composite display is a simultaneous presentation of the Lissajous figures of that region for each test frequency and for the selected mix of test frequencies.

In a first embodiment of the invention test data is collected from signals produced by an eddy current detector which is supplied with an alternating current test signal composed of several different test frequencies. Each detector signal is associated with a respective current test frequency signal and the test data is composed of variations in amplitude and phase between the detector signals and the respective test frequency signals as the detector is displaced relative to a test body. The data is processed for display by deriving from each detector signal the components in phase with and in quadrature with the associated test frequency signal; deriving the location of the detector with respect to the test body for each derived component of the detector signal; calculating in-phase and in-quadrature components for a selected mixture of several test frequencies; storing the detector signals and the data derived from the test signals; providing a first composite display of paired parallel strip charts in which the derived phase components are plotted against detector location for each test frequency and the selected mix of test frequencies; and providing a second composite display of Lissajous figures for each test frequency and for the selected mix of test frequencies for any designated region of any strip chart.

Figure 1 is a combined block diagram and pictorial view of a system for implementing the invention and illustrates the first composite display provided.

Figure 2 is a pictorial of the second composite display provided by the invention.

The alternating current test signal applied to the detector contains several test frequencies. By way of example, the test signal may be composed of a carrier- frequency, $f$, and test frequencies that are harmonics of the carrier, 400 kHz, 100 kHz and 10 kHz, so that the bridge unbalance voltage signal will be composed of three signals, each a modulated version of the carrier frequency at one of these frequencies. Each frequency is useful for examining flaws at a different depth in the body being tested.

For each test frequency the corresponding unbalance voltage signal will be divided into a component $Ex_f$ which is in phase with the associated test frequency, and a component $Ey_f$ which is in quadrature with the associated test frequency.

In addition, to eliminate unwanted signals, it is useful to derive in-phase and in-quadrature components based on a mixture of the components associated with several test frequencies. For example, the following component signals have been found useful for observing certain types of flaws:

$$Ex_{mix} = a \cdot Ex_{400} + b \cdot Ex_{100} + c \cdot Ey_{400} + d \cdot Ey_{100};$$

$$Ey_{mix} = e \cdot Ey_{400} + f \cdot Ey_{100} + g \cdot Ex_{400} + h \cdot Ex_{100};$$

where $Ex_{400}$ and $Ex_{100}$ are the in-phase components of the 400 kHz and 100 kHz unbalance voltage signals, $Ey_{400}$ and $Ey_{100}$ are the in-quadrature components of the 400 kHz and 100 kHz unbalance voltage signals, etc. The coefficients a-h are derived statistically, according to principles known in the art, in consideration of the particular body, the types of flaws to be observed, and the signals to be eliminated.

The present invention utilizes an interactive color graphics display system to review eddy current test data in the form of strip charts or Lissajous figures. Each strip chart is based on a component of an unbalanced voltage signal associated with a particular detector excitation test frequency signal or a component of a mixture signal derived from the signals associated with several excitation test frequency signals. Each excitation test frequency signal, or the mixture signal, is associated with two adjacent strip charts which represent, respec-

5

0165761

tively, the in-phase component and the in-quadrature component of the associated signal.

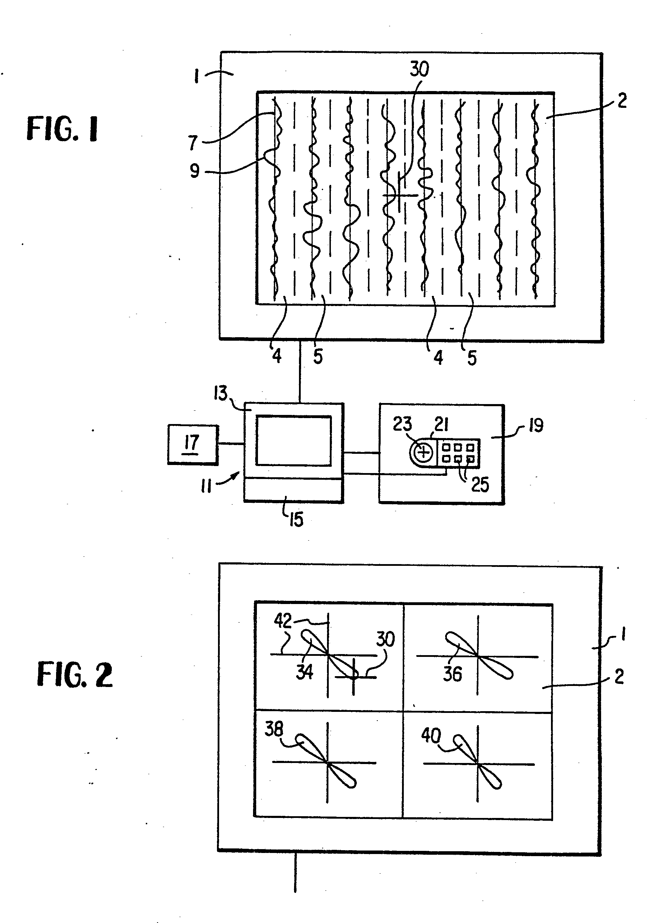

A strip chart display according to the invention is shown in Figure 1, which illustrates a color graphics display device 1 having a display screen 2. The screen is divided into eight strip displays of four paired regions 4, 5, with each strip display having a vertical reference axis 7 and a waveform plot 9 of a specific test signal component.

Each region 4, and the region 5 to the right thereof contain waveforms associated with corresponding in-phase and in-quadrature components derived from a respective unbalanced voltage signal from the eddy current detector or from the mixture of the components associated with several carrier frequencies. The region 4 displays the associated in-phase component, while the region 5 displays the associated in-quadrature component. Each vertical reference axis 7 corresponds to the path of displacement of the eddy current detector in or along the body being tested.

Display device 1 is connected to a control unit 11 composed of a monochrome monitor 13 for displaying text material and a keyboard 15 for controlling the input of information to display device 1. Control unit 11 is connected to a computer 17 in which the information for producing displays on screen 1 and the program for controlling the display are stored.

Also connected to unit 13 is an input device 19 for inputting directions by the user to control the display on screen 2. The input device here represented is a graphics tablet which cooperates with a cursor 21 moveable over the surface of the graphics tablet to bring a cursor control element 23 to any selected point on the surface of the tablet.

Tablet 19 is linked to monitor 13 such that movement of cursor 21 over the tablet surface produces a corresponding displacement of cursor 30 on screen 2.

Cursor 21 is linked to control unit 11 and has a plurality of function keys 25 which can be individually actuated to alter the display on screen 2 according to user commands.

By way of example, an operative system according to the invention has been constructed utilizing, as computer 17, a Data General MV series computer, for control unit 11, a Data General Dasher D200 terminal, for display device 1, a Raster Technologies Model 120 color graphics display system and for input device 19 and cursor 21, a GTCO Digi-Pad 5 graphics tablet with cursor.

In order to produce the desired displays, test data is derived by known techniques and successive samples of each component signal are stored in digital form in computer 17. The data remains permanently stored during analysis. Furthermore, the above-described system can be easily programmed to perform the functions described herein.

When cursor 30 is placed at a desired point on any one of waveforms 9, selected function keys 25 can be actuated to vary the scale or zero position of that waveform, or to select the start and end points for the information contained in an associated pair of waveforms which is to be used to produce a corresponding Lissajous figure.

Cursor 30 can also be placed on a selected axis 7 and a selected key 25 can be actuated to vary the scale of the waveform display on axis 7. Alternatively, keys 25 on keyboard 15 can be actuated to simultaneously vary the scales of all waveform displays on their respective axes 7.

In addition, under control of keyboard 15, the vertical scale of all the data can be varied to permit a complete data set, i.e. data for an entire tube, or a limited amount of the data to be displayed. Furthermore, all of the waveforms can be stepped vertically in either direction. It is also possible to eliminate one or more waveform pairs, which will permit the speed with which the remaining strip charts are traced on screen 2 to be increased.

Preferably, all of the base information for the display on screen 2, that is, the reference axis markers and any other display elements which are independent of the data values themselves, is written on a single bit plane of the computer memory so that as the other information displayed on screen 2 is varied, the base information remains constant.

In addition, it is preferable that the data corresponding to each waveform, or associated pair of waveforms, be stored in one image memory bank so that one such display on screen 2 does not have to be rewritten when another display is altered.

Furthermore, it is preferable that each waveform pair have a respectively different color for ease of identification. This feature does not require any significant portion of the computer memory.

After two end points along a selected reference axis 7 have been selected and indicated to the computer as described, the display on screen 2 can be changed from that shown in Figure 1 to that shown in Figure 2, where corresponding Lissajous figures are displayed for each associated pair of component signals. Thus, by way of example, Lissajous figure 34 represents the data associated with a selected portion of each of the first two strip charts 4, 5, starting from the left, shown in Figure 1 and derived from the bridge unbalance voltage signal associated with the test signal frequency of 400 kHz. The other Lissajous figures 36, 38 and 40 are similarly related with respective pairs of strip charts 4, 5 representing unbalance voltage signals associated with the test frequencies 100 kHz and 10 kHz, and the mix of test signals, $Ex_{mix}$ and $Ey_{mix}$.

Cursor 30 continues to be displayed on screen 2 and is utilized to perform various operations on the Lissajous figure displays. For example, cursor 30 can be used to center each Lissajous figure with respect to its

8

0165761

associated reference axes 42 and/or to alter the scale of each figure. Cursor 30 can also be used to provide a measurement of any angle of an associated Lissajous figure. All of these operations are performed under control of cursor 21 and function keys 25 (Figure 1).

For example, in order to measure an angle, cursor 30 is brought to the origin of the reference axes 42 and a first function key 25 is actuated. Cursor 30 is then moved to any position on the associated display and a line will appear on the display between the origin of the coordinate axes and the origin of cursor 30. A second function key 25 is actuated and the inclination of the measuring line is indicated in numerical form on monitor 13.

Similarly, the vector amplitude of any point of a Lissajous figure can be measured by placing the origin of cursor 30 at the desired point on the figure and depressing another selected function key 25. A numerical indication of the vector amplitude value is then displayed on monitor 13.

Each Lissajous figure display 34, 36, 38 and 40 can be further controlled, by means of cursor 30 to permit the development of the Lissajous figure to be observed, i.e. successive segments of such a figure can be written onto screen 2.

As in the case of the waveforms 9 of Figure 1, each of the Lissajous figures 34, 36, 38 and 40 of Figure 2 can be displayed in a different color and the base information, i.e. the information for producing the vertical and horizontal lines dividing screen 2 into four quadrants and the reference axes for each figure can be stored in a single bit plane of the computer memory so that the associated information will remain constant.

In place of cursor 21, use could be made of a commercially available trackball or mouse. In this case, the function instructions could be provided by actuating selected keys of keyboard 15.

9

CLAIMS:

1. A method for displaying test data collected from signals produced by an eddy current detector which is supplied with an alternating current test signal composed of several different test frequencies, each detector signal associated with a respective current test frequency signal providing test data being composed of variations in amplitude and in phase between the detector signals and the respective test frequency signals as the detector is moved relative to a test body, wherein;

from each detector signal the components in phase with and in quadrature with the associated test frequency signal are derived;

the location of the detector with respect to the test body for each derived component of the detector signal is obtained; the in-phase and in-quadrature components for a selected mix of test frequencies are derived; and

the detector signals and the data derived from the test signals are stored, characterized in that a first composite display is provided of paired, parallel strip charts (4, 5) in which the derived phase components (9) are plotted against detector location (7) for each test frequency and the selected mix of test frequencies and a second composite display of Lissajous figures (34, 36, 38, 40) is provided for each test frequency and for the selected mix of test frequencies for any designated region of any strip chart (4, 5).

2. A method as defined in claim 1 characterized in that the scale of a selected detector location axis is selectively variable.

3. A method as defined in claim 1 or 2 characterized in that the scale of one or more selected waveforms is selectively variable.

4. A method as defined in claim 1, 2, or 3 characterized in that different colors are selected for the strip chart and Lissajous figure display associated with a particular test frequency or the selected mix of text frequencies.

5. Apparatus for producing a display of test data collected from signals produced by an eddy current detector which is supplied with an alternating current test signal composed of several different test frequencies, each detector signal being associated with a respective current test frequency, the test data being composed of variations in amplitude and in phase between the test signals and the respective test frequency signals as the detector is moved relative to a test body, said apparatus comprising means for deriving from each detector signal the detector signal components in phase with and in quadrature with the associated test frequency signal, the location of the detector with respect to the test body for each signal component and the in-phase and in-quadrature components for a selected mix of test frequencies; means for storing the detector signals and the data derived from the test signals connected to the deriving means and display means connected to said storing means characterized in that a first composite display capability of showing paired, parallel strip charts (4, 5) in which the derived phase components (9) are plotted against detector location (7) for each test frequency and the selected mix of test frequencies and a second composite plot of Lissajous figures (34, 36, 38, 40) is provided for each test frequency and for the selected mix of test frequencies for any designated region of any strip chart (4, 5).

FIG. 1

FIG. 2

0165761